# EUROPÄISCHE PATENTSCHRIFT

(11) **EP 0 628 657 B1**
(45) Veröffentlichungstag und Bekanntmachung des Hinweises auf die Patenterteilung: **27.03.1996**
(21) Anmeldenummer: 94107019.5
(22) Anmeldetag: 05.05.1994
(51) Int. Cl.: D21G 5/00

(54) **Fingerschutzvorrichtung für einen Walzenspalt**
Finger guard for a roll nip
Dispositif de protection des doigts pour un espacement entre cylindres

(30) Priorität: 05.06.1993 DE 4318773
(43) Veröffentlichungstag der Anmeldung: 14.12.1994
(73) Patentinhaber: Voith Sulzer Finishing GmbH, D-47803 Krefeld (DE)
(72) Erfinder: Conrad, Hans-Rolf, D-41539 Dormagen (DE); Castner, Horst, D-59229 Ahlen (DE)
(74) Vertreter: Knoblauch, Ulrich, Dr.-Ing., Patentanwälte Dr. Knoblauch

(56) Entgegenhaltungen:
- DE-A- 3 838 746

## Beschreibung

Die Erfindung bezieht sich auf eine Fingerschutzvorrichtung für einen Walzenspalt, insbesondere bei einem Kalander mit beheizten Walzen, in Form eines sich längs des Walzenspalts erstreckenden Hohlkörpers mit einer der einen den Walzenspalt begrenzenden Walze zugekehrten Vorderwand, einer um eine Längsachse des Hohlkörpers gewölbten Rückwand und zwei Stirnwänden, wobei die Längskanten von Vorder- und Rückwand bildende Leisten jeweils zu einer der den Walzenspalt begrenzenden Walzen hin relativ zu Vorder- und Rückwand abgewinkelt sind und einen vorbestimmten Höchstabstand von den Walzen aufweisen, der ein Hindurchgreifen mit den Fingern zwischen einer Längskante und der benachbarten Walze nicht zuläßt, und der Hohlkörper an den Stirnwänden relativ zu den Walzen verstellbar gelagert ist.

Bei einer bekannten Fingerschutzvorrichtung dieser Art (DE 40 30 150 C1) besteht der Hohlkörper aus Metall. Er hat daher ein sehr hohes Gewicht, so daß er für einen Walzenwechsel durch Motorkraft wegschwenkbar gelagert sein muß. Da der Hohlkörper bei langen Walzen ebenfalls entsprechend lang ist, besteht sodann die Gefahr, daß er sich aufgrund seines Eigengewichts und/oder von Temperaturschwankungen, insbesondere bei beheizten Walzen, stark durchbiegt, so daß der aus Sicherheitsgründen zulässige Höchstabstand (von 8 mm bei Kalandern) überschritten wird. Außerdem liegt die Eigenresonanzfrequenz des Hohlkörpers häufig im Bereich der Betriebsdrehzahlen der Walzen. Der Hohlkörper neigt daher zu Resonanzschwingungen, die bis zum Berühren der Walzen führen können. Schließlich ist die Herstellung eines solchen Hohlkörpers aus Metall kostspielig.

Der Erfindung liegt die Aufgabe zugrunde, eine Fingerschutzvorrichtung der eingangs genannten Art anzugeben, die bei einfacher Herstellbarkeit und Handhabbarkeit den einzuhaltenden Höchstabstand zu den Walzen während des Betriebs nicht überschreitet.

Erfindungsgemäß ist diese Aufgabe dadurch gelöst, daß der Hohlkörper aus faserverstärktem Kunstharz besteht und Vorder- und Rückwand getrennt hergestellt und miteinander verbunden sind, daß die Leisten durch einstückig mit Vorder- und Rückwand geformte und miteinander verbundene Flansche gebildet sind und daß die Stirnwände getrennt hergestellt und mit Vorder- und Rückwand verbunden oder einstückig mit der Vorder- oder Rückwand hergestellt sind.

Aufgrund der Eigenschaften des faserverstärkten Kunstharzes, bei dem es sich um einen Faserverbundwerkstoff handelt, hat ein solcher Hohlkörper ein erheblich geringeres Gewicht und einen sehr viel kleineren Wärmeausdehnungskoeffizienten als ein entsprechender Hohlkörper aus Metall und ist außerordentlich biegesteif. Er neigt daher nicht zu einer Durchbiegung aufgrund seines Gewichts und/oder aufgrund von Temperaturschwankungen. Seine Eigenfrequenz liegt höher als die Betriebsfrequenz der Walzen, so daß er nicht zu Resonanzschwingungen angeregt wird. Wegen des geringen Gewichts ist er ferner leicht manuell zu handhaben. Die Herstellung ist sehr einfach in Formen unter Anwendung von Druck, beispielsweise durch Zusammendrücken der Formwerkzeuge oder im Injektionsverfahren, möglich, wobei die getrennte Herstellung der Stirnwände und ihre nachträgliche Verbindung mit der Vorder- und Rückwand den Vorteil hat, daß Vorder- und Rückwand zunächst in sehr großer Länge hergestellt und dann Vorder- und Rückwände auf die gewünschten Längen zugeschnitten werden können. Bei einteiliger Ausbildung der Stirnwände mit der Vorder- oder Rückwand entfällt die nachträgliche Verbindung mit dieser Wand. Dennoch ist aufgrund der zwischen den Flanschen liegenden Trennflächen der beiden Wände ein leichtes Entformen möglich.

Bei den Fasern kann es sich um hochfeste Fasern, vorzugsweise Kohlenstoffasern oder Textilglasfasern oder synthetische Fasern oder ein Gemisch dieser Fasern handeln. Diese Fasern verleihen dem Hohlkörper eine hohe Festigkeit und haben eine sehr geringe Wärmeausdehnung. Bei dem Kunstharz handelt es sich vorzugsweise um Epoxidharz.

Das Verbinden der Hohlkörperteile kann durch Kleben erfolgen. Zusätzlich oder stattdessen ist aber auch eine Verbindung mittels Schrauben oder Nieten, insbesondere im Bereich der Flansche, möglich.

In den Stirnwänden kann jeweils eine Metallplatte eingebettet sein, an der ein Lagerzapfen befestigt ist. Die Einbettung kann auf einfache Weise dadurch erfolgen, daß die Metallplatte bei der Herstellung der Stirnwände eingeformt oder nachträglich durch Überlaminieren auf einer vorgefertigten Schicht der Stirnwände befestigt wird.

Sodann kann dafür gesorgt werden, daß jeder Lagerzapfen in einem Kreuzauge auf einer gestellfesten horizontalen Stange, die sich quer zu den Walzen erstreckt, lösbar festgeklemmt ist. Ein solches Kreuzauge ist ein einfaches Bauteil, daß nach Lösen der Klemmstellen auf einfache Weise eine Einstellung des Hohlkörpers auf den gewünschten Abstand zu den Walzen ermöglicht.

Die Erfindung und Ihre Weiterbildungen werden nachstehend anhand der Zeichnungen bevorzugter Ausführungsbeispiele näher beschrieben. Es zeigen:
- Fig. 1: eine Seitenansicht zweier Walzen eines Papierkalanders mit einer erfindungsgemäßen Fingerschutzvorrichtung in schematischer Darstellung,
- Fig. 2: eine Vorderansicht der Walzen und der Fingerschutzvorrichtung nach Fig. 1,
- Fig. 3: einen Querschnitt durch die Fingerschutzvorrichtung nach den Fig. 1 und 2 in vergrößertem Maßstab,
- Fig. 4: eine Ansicht des einen Endes der Fingerschutzvorrichtung von links in Fig. 3 in teilweise aufgebrochenem Zustand und
- Fig. 5: eine Vorderansicht einer etwas abgewandelten Rückwand einer erfindungsgemäßen Fingerschutzvorrichtung, teilweise im Querschnitt.

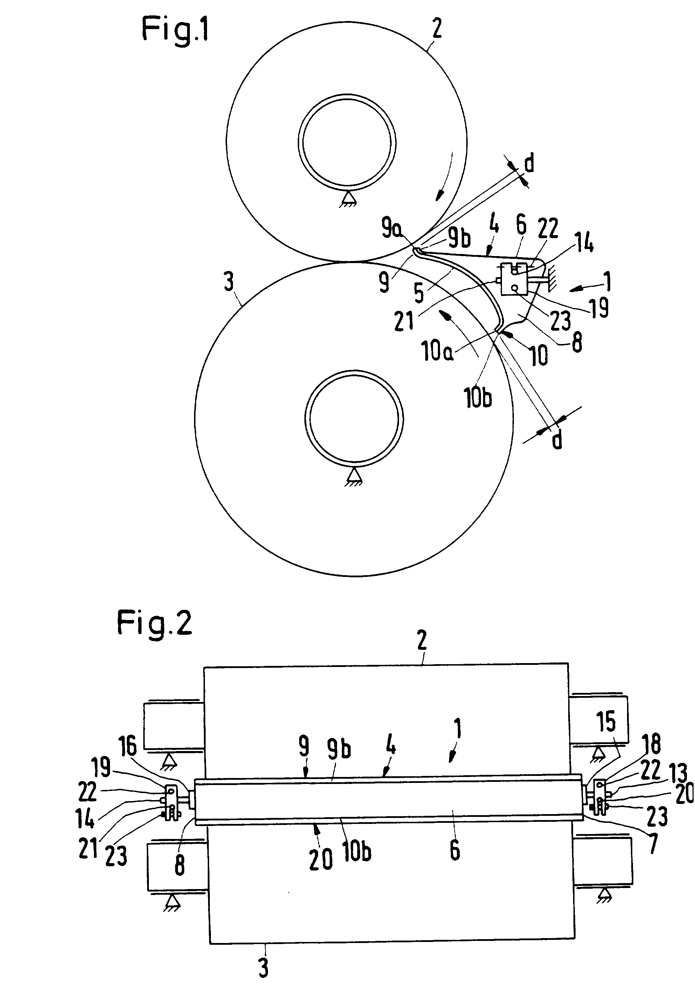

Die Fingerschutzvorrichtung 1 nach den Fig. 1 bis 4 ist auf der Einlaufseite eines Walzenspalts zweier Walzen eines Papierkalanders mit beheizten Walzen angeordnet und verhindert, daß eine Bedienungsperson in den Walzenspalt greifen kann. Zu diesem Zweck ist ein Höchstabstand d von nur 8 mm zwischen der Fingerschutzvorrichtung 1 und den Walzen 2, 3 zugelassen.

Die Fingerschutzvorrichtung 1 hat einen sich über die gesamte Länge der Walzen 2, 3 erstreckenden Hohlkörper 4 mit einer dem Walzenspalt zugekehrten Vorderwand 5, einer um eine Längsachse des Hohlkörpers 4 gewölbten Rückwand 6 und zwei Stirnwänden 7 und 8. Die Längskanten von Vorder- und Rückwand 5, 6 bildende Leisten 9, 10 sind jeweils zu einer der den Walzenspalt begrenzenden Walzen 2, 3 hin relativ zu Vorder- und Rückwand 5, 6 abgewinkelt. Der Hohlkörper besteht aus faserverstärktem Kunstharz, wobei es sich bei den Fasern vorzugsweise um Kohlenstoffasern handelt. Alternativ oder zusätzlich können auch Textilglasfasern vorgesehen sein. Vorder- und Rückwand 5, 6 sind getrennt hergestellt und miteinander verklebt. Die Leisten 9, 10 sind durch einstückig mit Vorder- und Rückwand 5, 6 geformte und miteinander verklebte Flansche 9a, 9b bzw. 10a, 10b gebildet. Die Stirnwände sind getrennt hergestellt und mit Vorder- und Rückwand 5, 6 verklebt oder einstückig mit Vorder- oder Rückwand 5, 6 hergestellt. Die Flansche 9a, 9b bzw. 10a, 10b können alternativ oder zusätzlich auch durch Schrauben oder Nieten verbunden sein.

In den Stirnwänden 7, 8 ist jeweils eine Metallplatte 11, 12 eingebettet, an der ein Lagerzapfen 13, 14 über eine außen an den Stirnwänden 7, 8 anliegende Platte 15, 16 und Schrauben 17 (die in Fig. 2 nicht dargestellt sind) befestigt ist.

Jeder Lagerzapfen 13, 14 ist in einem Kreuzauge 18, 19 und dieses auf einer gestellfesten horizontalen Stange 20, 21 mittels Schrauben 22, 23 in Klemmschlitzen lösbar festgeklemmt.

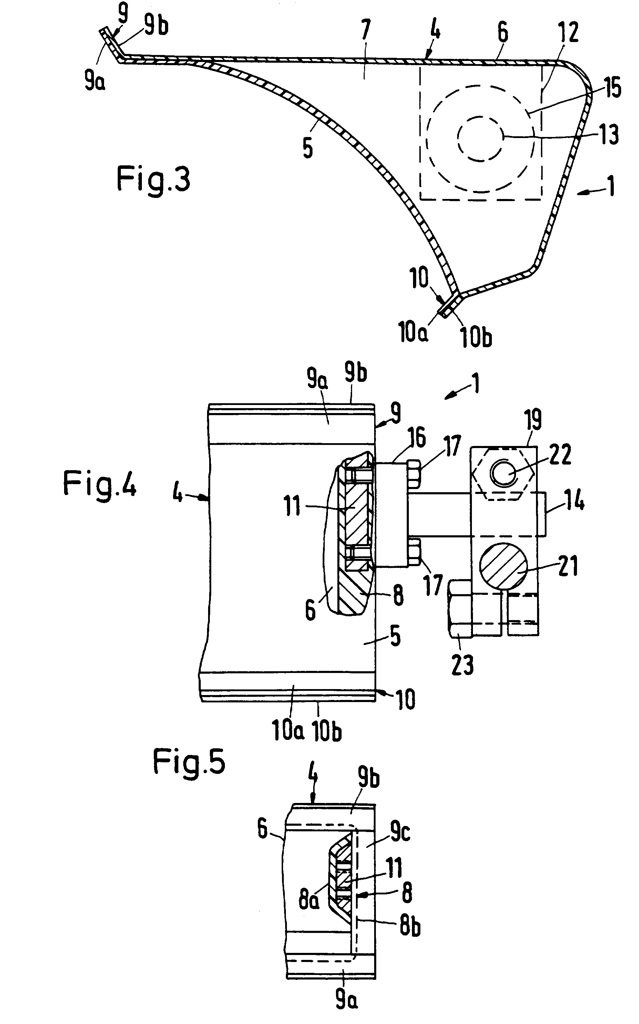

Bei der Abwandlung nach Fig. 5 ist bei jeder Stirnwand, von denen nur die Stirnwand 8 dargestellt ist, die Metallplatte 11 (12) ist an der Innenseite eines vorgefertigten äußeren Stirnwandteils 8b durch ein Überlaminat 8a, das einen inneren Stirnwandteil bildet, befestigt.

Eine spezielle Ausführungsform der Fingerschutzvorrichtung mit einer Länge von 5 m und für beheizte Walzen mit Oberflächentemperaturen von bis zu 170°C hatte folgende Daten:
- Gewicht (ohne Lagerzapfen) ca. 25 kg
   65 % Kohlefaser, Dichte 1,7 kg/dm³,
   35 % Epoxidharz, Dichte 1,1 kg/dm³,
   Wandstärke etwa 5 mm
   (z. Vgl.: Edelstahlwinkel ca. 130 kg)
- Durchbiegung durch Eigengewicht < 2,5 mm
- Verformung durch Wärmeausdehnung ca. 2 bis 3 mm
   Wärmeausdehnungskoeffizient (1 bis 4)·10^{-6°}K⁻¹
   (z. Vgl.: Edelstahl 12·10⁻⁶°K⁻¹)
- Abweichung von der Geradheit bei Fertigung < 1 mm
   (abhängig von der Genauigkeit der Formen und Vorrichtungen)
- Temperaturbeständigkeit bis 170°C
- Eigenfrequenz > 15 Hz
- E-Modul (Achsrichtung) 120000 N/mm

Eine solche Fingerschutzvorrichtung hat den Vorteil, daß sie auf einfache Weise herstellbar und aufgrund ihres geringen Gewichts und ihres geringen Wärmeausdehnungskoeffizienten ihren einmal eingestellten Abstand d von den Walzen 2, 3 beibehält und leicht zu handhaben ist. So ist es möglich, auf einen motorisch betätigten Mechanismus zum Wegschwenken der Fingerschutzvorrichtung beim Walzenaufbau zu verzichten, da sie leicht durch zwei Bedienungspersonen von Hand durch Lösen der Schrauben 23 ausgebaut und wegtransportiert werden kann. Ebenso einfach kann sie umgekehrt justiert und montiert werden.

## Patentansprüche

1. Fingerschutzvorrichtung (1) für einen Walzenspalt, insbesondere bei einem Kalander mit beheizten Walzen, in Form eines sich längs des Walzenspalts erstreckenden Hohlkörpers (4) mit einer der einen den Walzenspalt begrenzenden Walze (3) zugekehrten Vorderwand (5), einer um eine Längsachse des Hohlkörpers (4) gewölbten Rückwand (6) und zwei Stirnwänden (7, 8), wobei die Längskanten von Vorder- und Rückwand bildende Leisten (9, 10) jeweils zu einer der den Walzenspalt begrenzenden Walzen (2, 3) hin relativ zu Vorder- und Rückwand (5, 6) abgewinkelt sind und einen vorbestimmten Höchstabstand (d) von den Walzen (2, 3) aufweisen, der ein Hindurchgreifen mit den Fingern zwischen einer Längskante und der benachbarten Walze (2; 3) nicht zuläßt, und der Hohlkörper (4) an den Stirnwänden (7, 8) relativ zu den Walzen (2, 3) verstellbar gelagert ist, **dadurch gekennzeichnet,** daß der Hohlkörper (4) aus faserverstärktem Kunstharz besteht und Vorder- und Rückwand (5, 6) getrennt hergestellt und miteinander verbunden sind, daß die Leisten (9, 10) durch einstückig mit Vorder- und Rückwand (5, 6) geformte und miteinander verbundene Flansche (9a, 9b; 10a, 10b) gebildet sind und daß die Stirnwände (7, 8) getrennt hergestellt und mit Vorder- und Rückwand (5, 6) verbunden oder einstückig mit der Vorder- oder Rückwand (5, 6) hergestellt sind.

2. Fingerschutzvorrichtung nach Anspruch 1, dadurch gekennzeichnet, daß die Fasern Kohlenstoff- oder Textilglasfasern oder synthetische Fasern oder Kombinationen daraus sind.

3. Fingerschutzvorrichtung nach Anspruch 1 oder 2, dadurch gekennzeichnet, daß die Hohlkörperteile (5, 6, 7, 8) durch Kleben verbunden sind.

4. Fingerschutzvorrichtung nach einem der Ansprüche 1 bis 3, dadurch gekennzeichnet, daß in den Stirnwänden (7, 8) jeweils eine Metallplatte (11; 12) eingebettet ist, an der ein Lagerzapfen (13; 14) befestigt ist.

5. Fingerschutzvorrichtung nach Anspruch 4, dadurch gekennzeichnet, daß jeder Lagerzapfen (13, 14) in einem Kreuzauge (18; 19) auf einer gestellfesten horizontalen Stange (20; 21), die sich quer zu den Walzen (2, 3) erstreckt, lösbar festgeklemmt ist.

## Claims

1. Finger guard (1) for a roll nip, in particular in a calender with heated rolls, in the form of a hollow body (4) extending along the roll nip and comprising a front wall (5) directed towards one roll (3) defining the roll nip, a rear wall (6) curved around a longitudinal axis of the hollow body (4) and two end walls (7, 8), bars (9, 10) forming the longitudinal edges of the front and rear walls each being at an angle to one of the rolls (2, 3) defining the roll nip relative to the front and rear walls (5, 6) and at a predetermined maximum distance (d) from the rolls (2, 3) which does not allow for the insertion of fingers between one longitudinal edge and the adjacent roll (2, 3), and the hollow body (4) being adjustably supported relative to the rolls (2, 3) at the end walls (7, 8), characterised in that the hollow body (4) consists of fibre-reinforced synthetic resin and the front and rear walls (5, 6) are produced separately and connected together, that the bars (9, 10) are formed by flanges (9a, 9b; 10a, 10) moulded in one piece with the front and rear walls (5, 6) and connected together and that the end walls (7, 8) are produced separately and are connected to the front and rear walls (5, 6) or are produced in one piece with the front or rear wall (5, 6).

2. Finger guard according to claim 1, characterised in that the fibres are carbon or glass fibres or synthetic fibres or combinations thereof.

3. Finger guard according to claim 1 or claim 2, characterised in that the hollow body parts (5, 6, 7, 8) are connected by gluing.

4. Finger guard according to one of claims 1 to 3, characterised in that respective metal plates (11; 12) to which bearing journals (13; 14) are secured are embedded in the end walls (7, 8).

5. Finger guard according to claim 4, characterised in that each bearing journal (13, 14) is removably clamped in a cross eye (18; 19) on a horizontal rod (20; 21) fixed to the frame and extending transversely to the rolls (2, 3).

## Revendications

1. Dispositif de protection des doigts (1) pour un interstice entre cylindres, notamment dans une calandre comprenant des cylindres chauffés, le dispositif se présentant sous la forme d'un corps creux (4), qui s'étend le long de l'interstice entre cylindres, et qui comporte une paroi avant (5) dirigée vers l'un (3) des cylindres délimitant l'interstice entre cylindres, une paroi arrière (6) bombée autour d'un axe longitudinal du corps creux (4), et deux parois frontales (7, 8), des nervures (9, 10), qui forment les bords longitudinaux de la paroi avant et de la paroi arrière, étant coudées chacune relativement à la paroi avant et arrière (5, 6), en direction de l'un des cylindres (2, 3) qui délimitent l'interstice entre cylindres, et présentant chacune une distance maximale (d) aux cylindres (2, 3) n'autorisant pas le passage des doigts entre un bord longitudinal et le cylindre voisin (2, 3), et le corps creux (4) étant monté de manière réglable par rapport aux cylindres (2; 3), au niveau de ses parois frontales (7, 8), caractérisé en ce que le corps creux (4) est réalisé en une résine synthétique renforcée de fibres, les parois avant et arrière (5, 6) étant fabriquées séparément et assemblées l'une à l'autre, en ce que les nervures (9, 10) sont formées par des flasques (9a, 9b; 10a, 10b), qui sont moulés d'un seul tenant avec les parois avant et arrière (5, 6), et qui sont assemblés les uns aux autres, et en ce que les parois frontales (7, 8) sont fabriquées séparément et sont assemblées aux parois avant et arrière (5, 6), ou bien sont fabriquées d'un seul tenant avec la paroi avant ou la paroi arrière (5, 6).

2. Dispositif de protection des doigts selon la revendication 1, caractérisé en ce que les fibres sont des fibres de carbone, ou des fibres textiles de verre, ou bien des fibres synthétiques, ou bien encore une combinaison de celles-ci.

3. Dispositif de protection des doigts selon la revendication 1 ou 2, caractérisé en ce que les pièces de corps creux (5, 6, 7, 8) sont assemblées par collage.

4. Dispositif de protection des doigts selon l'une des revendications 1 à 3, caractérisé en ce que dans chacune des parois frontales (7, 8) est encastrée une plaque métallique (11; 12), sur laquelle est fixé un tourillon de palier (13; 14).

5. Dispositif de protection des doigts selon la revendication 4, caractérisé en ce que chaque tourillon de palier (13, 14) est serré de manière fixe mais amovible, dans un joint d'assemblage à anneaux de serrage croisés (18; 19), sur une barre (20; 21) horizontale, fixe avec le bâti, et s'étendant transversalement aux cylindres (2, 3).
